## Europäisches Patentamt

## European Patent Office

## Office européen des brevets

(11) Veröffentlichungsnummer: **0 094 643**
A2

## (12) EUROPÄISCHE PATENTANMELDUNG

(21) Anmeldenummer: **83104744.4**

(22) Anmeldetag: **13.05.83**

(51) Int. Cl.³: **A 61 C 13/20**

(30) Priorität: **19.05.82 DE 3219008**

(43) Veröffentlichungstag der Anmeldung:
**23.11.83 Patentblatt 83/47**

(84) Benannte Vertragsstaaten:
**AT CH DE FR GB IT LI NL SE**

(71) Anmelder: **Wismann, Horst**
**Gartenstrasse 22**
**D-8162 Schliersee(DE)**

(72) Erfinder: **Wismann, Horst**
**Gartenstrasse 22**
**D-8162 Schliersee(DE)**

(74) Vertreter: **Klingseisen, Franz, Dipl.-Ing. et al,**
**Dr. F. Zumstein sen. Dr. E. Assmann Dr. R.**
**Koenigsberger Dr. F. Zumstein jun. Dipl.-Ing. F.**
**Klingseisen Bräuhausstrasse 4**
**D-8000 München 2(DE)**

(54) **Giessgerät für Dentalgussteile.**

(57) Für die Herstellung von Zahnersatzteilen wird ein Gießgerät mit einem steuerbaren Gießventil am Schmelztiegel und einer anhebbaren und absenkbaren Glocke vorgeschlagen, die mit Druck und/oder Vakuum beaufschlagt und in der mehrere Formen angeordnet werden können, wobei unterschiedliche Betriebsabläufe durch eine elektrische Steuereinheit wählbar sind und das beispielsweise unabhängig vom Gießvorgang z.B. ein Modell mit Druck oder Vakuum beaufschlagt werden kann.

Fig.1

EP 0 094 643 A2

Gießgerät für Dentalgußteile
=================================

Die Erfindung betrifft ein Gießgerät für Dentalgußteile
nach dem Oberbegriff des Anspruchs 1.

Ein Gerät dieser Art ist aus der DE-OS 26 34 132 bekannt,
wobei in der topfförmig ausgebildeten Gießkammer der
Schmelztiegel angeordnet und auf diesen eine Gußform aufsteckbar ist, worauf durch Verschwenken der Gießkammer um
180° die Gußform gefüllt wird. Durch eine entsprechende
Steuereinheit kann der Schwenkvorgang automatisch ausgeführt und Druck oder Vakuum an der Gießkammer angelegt
werden. Aufgrund der Schwenkbewegung der Gießkammer
ist dieses bekannte Gießgerät nicht für das Gießen mit
mehreren Formen geeignet.

Der Erfindung liegt die Aufgabe zugrunde, ein Gießgerät
der eingangs angegebenen Art so auszubilden, daß es das
Gießen mit mehreren Gußformen ermöglicht und zugleich
vielseitiger bei der Herstellung eines Abgusses von einem
Modell einsetzbar ist. Insbesondere soll das Gerät für
ein Verfahren geeignet sein, bei dem von einem Meistermodell
mittels einer Kautschukform ein Abguß aus niedrig schmelzendem Metall hergestellt wird, auf dem in einem galvanischen
Bad die erwünschten Zahnersatzteile abgeschieden werden.

Diese Aufgabe wird durch die Merkmale im Kennzeichen des
Anspruchs 1 gelöst. Durch die Anordnung eines Gießventils
kann der Schmelztiegel stationär angeordnet werden, so daß
dieser größer ausgebildet und zum Füllen mehrerer oder einer
größeren Gußform ausgelegt werden kann. Das Gießventil erlaubt eine genaue Dosierung des Gußmaterials und damit eine
exakte Steuerung des Gießvorganges.

Der im Schmelztiegel angeordnete Ventilkörper zum Absperren und Freigeben der Gießöffnung wird vorteilhafterweise mit einer elektrischen Heizeinrichtung versehen,
mittels der das zum Gießen verwendete Material im Schmelztiegel geschmolzen und schmelzflüssig gehalten werden kann.

Um eine einfache Steuerung des Gießventils zu ermöglichen,
wird der Ventilkörper durch ein Magnetventil betätigt, das
mit der Steuereinheit verbunden ist.

Der stabförmig ausgebildete Ventilkörper des Gießventils ist
konzentrisch in einem Abstand von einer Hülse umgeben, die
in der Schließstellung am Boden des Schmelztiegels aufliegt und im unteren Bereich auf dem Umfang mit Öffnungen
versehen ist. Hierdurch ergibt sich eine stabilere Führung
des Ventilkörpers beim Einschalten des Gerätes nach
längerem Stillstand.

Der Schmelztiegel kann außerhalb der Gießkammer angeordnet
sein. Zweckmäßigerweise wird der Schmelztiegel zusammen
mit dem die Gießöffnung steuernden Magnetventil in der
Gießkammer angeordnet.

Um das Einsetzen und Herausnehmen der Gußformen bequem
durchführen zu könnnen, wird die Gießkammer als Glocke ausgebildet und auf einer Platte angeordnet, wobei Glocke und
Platte in Achsrichtung relativ zueinander bewegbar sind. Je
nach Ausgestaltung kann dabei zum Öffnen der Gießkammer die
Glocke von der Platte abgehoben oder die Platte unterhalb
der Glocke abgesenkt werden.

Die Relativbewegung zwischen Glocke und Platte erfolgt zweckmäßigerweise über wenigstens eine Gewindespindel, so daß beim Schließen der Gießkammer und bei deren Druckbeaufschlagung eine zuverlässige Abdichtung gewährleistet ist. Dabei kann die Gewindespindel durch einen Motor angetrieben werden, der mit der Steuereinheit für einen automatischen Ablauf des Gießvorganges verbunden ist.

Zur Gewährleistung einer zuverlässigen Abdichtung wird zwischen Glocke und Platte eine schlauchförmige Dichtung vorgesehen, die mit Druckfluid beaufschlagbar ist und eventuelle Unebenheiten der Platte ausgleicht.

Damit die Gußform oder Gußformen in die richtige Stellung unter der Gießöffnung des Schmelztiegels zu liegen kommen, werden auf der Platte Ausnehmungen oder Vorsprünge zur Aufnahme der einzelnen Formen vorgesehen.

Der Schmelztiegel kann zum Füllen mehrerer Gußformen innerhalb der Gießkammer verstellbar, beispielsweise mit exzentrischer Gießöffnung verschwenkbar sein. Eine einfachere Ausgestaltung ergibt sich durch die Verwendung eines Verteilers, der auf die Gießöffnung des Schmelztiegels aufsetzbar ist, so daß bei stationärer Anordnung des Schmelztiegels mehrere Gußformen gefüllt werden können.

Da die Gußformen unterschiedliches Volumen haben, wird an diesen eine Überlauföffnung vorgesehen. Nach einer vorbestimmten Gießzeit, nach deren Ablauf auch die größte Gußform gefüllt ist, kann der Gießvorgang von der Steuereinheit abgeschaltet werden. Es ist auch möglich, am Überlauf eine Überwachungseinrichtung vorzusehen, die bei Austreten von Schmelze das Gießventil absperrt.

Für die Herstellung eines Abgusses aus niedrig schmelzendem

- 4 -

Metall von einem ursprünglichen Meistermodell wird die Gußform mit einer Abdeckung versehen, die auf der Unterseite
eine hinterschnittene Ausnehmung zur Aufnahme des Abgusses
aufweist, so daß nach Verfestigung des Abgusses dieser zusammen mit der Abdeckung gehandhabt werden kann.

Hierbei ist es zweckmäßig, diese Abdeckung aus einem
elektrisch nicht-leitenden Material auszubilden und mit
einer elektrischen Leitung zu versehen, die mit dem Abguß
in Verbindung steht. Zum Einsetzen der Abdeckung mit dem
daran befestigten Abguß in einem galvanischen Bad wird die
Abdeckung zweckmäßigerweise mit einem Führungsteil auf
der   Außenseite versehen.

Weitere Merkmale der Erfindung sind in den weiteren Unteransprüchen und in der nachfolgenden Beschreibung eines Ausführungsbeispiels angegeben.

Eine beispielsweise Ausführungsform des erfindungsgemäßen
Gerätes wird im folgenden anhand der Zeichnung näher erläutert. Es zeigen

Fig. 1 einen schematischen Querschnitt durch das Gerät;

Fig. 2 eine schematische Draufsicht auf das Gerät
nach Fig. 1;

Fig. 3 eine perspektivische, teilweise aufgeschnittene Ansicht einer Gußform;

Fig. 4 eine perspektivische Darstellung der Gußform mit Abdeckung,

Fig. 5 eine Seitenansicht der Abdeckung mit daran angegossenem Abguß, - 5 -

Fig. 6 eine Ausführungsform des Schmelztiegels mit Gießventil,

Fig. 7 einen an der Gießöffnung des Schmelztiegels anbringbaren Verteiler in der Gießstellung. und

Fig. 8 einen Fig. 1 entsprechenden Querschnitt einer abgewandelten Ausführungsform des Gerätes.

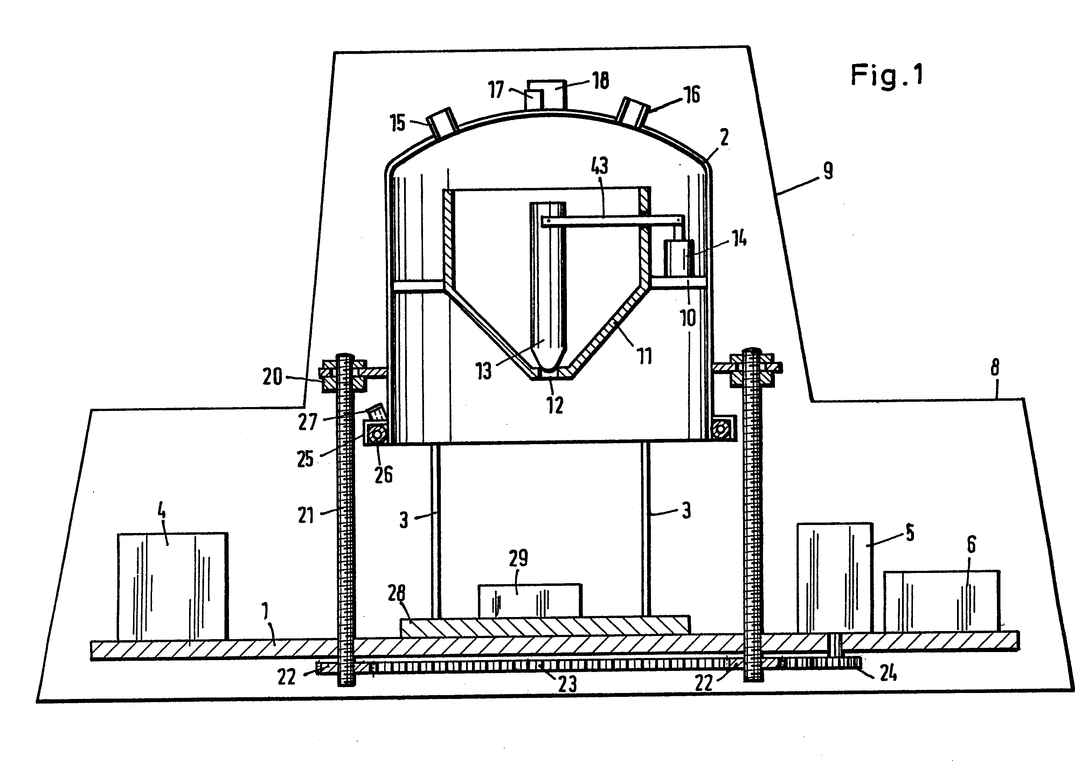

In Fig. 1 ist 1 eine Tragplatte, in deren Mitte etwa eine
Glocke 2 in senkrechter Richtung längs Führungsstangen 3
verschiebbar angeordnet ist, die an der Tragplatte 1 befestigt sind. Auf der Tragplatte 1 ist ferner eine elektrische Steuereinheit 4, ein Elektromotor 5, eine Vakuumpumpe 6 und eine pneumatische Steuereinheit 7 angeordnet.
Dieser Aufbau   ist von einem Gehäuse 8 umgeben, das in der
Mitte einen Dom 9 zu Aufnahme der nach oben verschobenen
Glocke 2 aufweist.

In der Glocke 2 ist mittels radialer Streben 10 ein Schmelztiegel 11 befestigt, an dessen Unterseite eine Gießöffnung
12 ausgebildet ist. Über der Gießöffnung 12 ist ein stabförmiger Ventilkörper 13 angeordnet, der über einen durch
die Wand des Schmelztiegels geführten Lenker 43 von einem
Magnetventil 14 angehoben und abgesenkt werden kann, das
auf einer der radialen Streben 10 angeordnet ist.

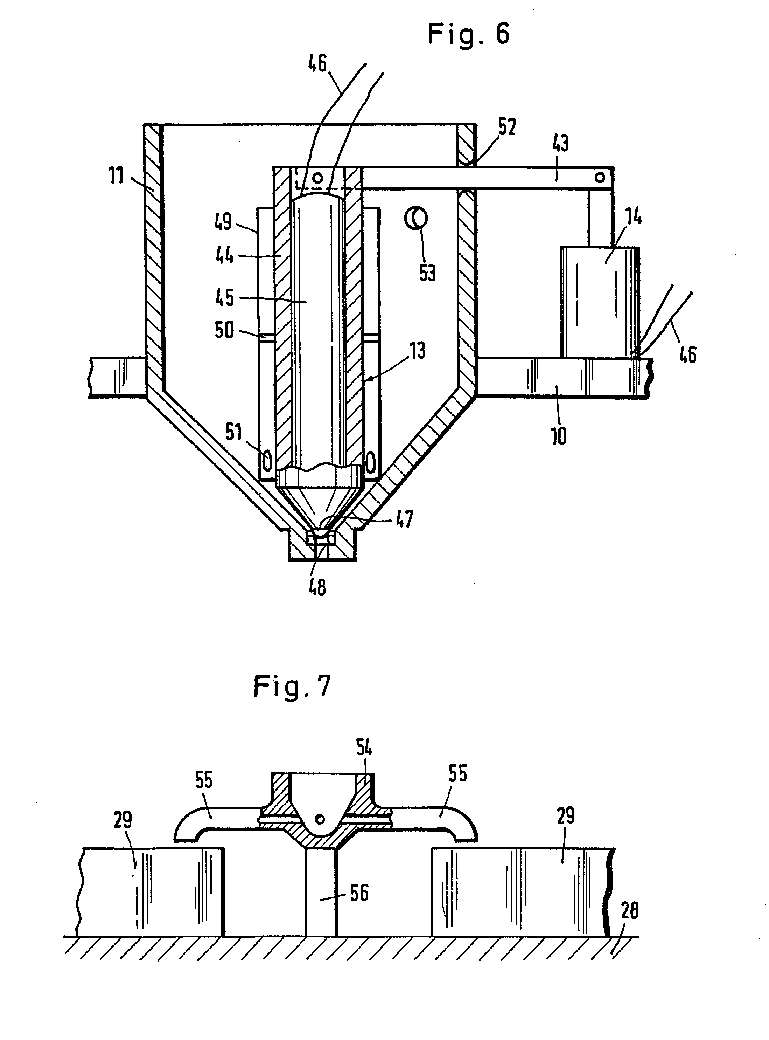

Wie die Fig. 6 zeigt, besteht der stabförmige Ventilkörper
13 aus einem unten geschlossenen, konisch zulaufenden
Hohlkörper 44, der beispielsweise aus Messing bestehen kann.
In den Hohlkörper 44 ist ein elektrischer Heizstab 45 eingesetzt, dessen Anschlußleitungen 46 wie die des Magnetventils über nicht dargestellte elektrische Kontakte mit
der Außenseite der Glocke 2 und mit der Steuereinheit 4 verbunden sind. Der Hohlkörper 44 liegt mit einer abgerundeten
Spitze 47 an einem den Ventilsitz bildenen Ring 48 auf,
wobei der kegelförmige Unterteil des Hohlkörpers 44 in der
dargestellten Schließstellung einen geringen Abstand von dem umgebenden, trichterförmig ausgebildeten Boden des Schmelztiegels hat und im wesentlichen linienförmig an dem Ring aufliegt. Durch die im Hohlkörper 44 eingebaute Heizung wird im Bereich des Ventilsitzes 47,48 das Material immer schmelzflüssig gehalten, so daß der Schmelztiegel zuverlässig durch den Ventilkörper 13 abgeschlossen werden kann.

Der Ventilkörper 13 bzw. der Hohlkörper 44 ist von einer Hülse 49 konzentrisch umgeben, die über radiale Ansätze 50 in einem Abstand vom Hohlkörper 44 gehalten wird. Im unteren Bereich ist diese Hülse 49 mit Öffnungen 51 auf dem Umfang versehen. In der in Fig. 6 wiedergegebenen Schließstellung des Ventils liegt die Hülse 49 auf dem Boden des Schmelztiegels 11 auf. Wird nach einem längeren Stillstand das Gerät wieder in Betrieb gesetzt, wobei das Material im Schmelztiegel 11 erstarrt ist, so wird zunächst das zwischen Hülse 49 und Ventilkörper 13 vorhandene Material geschmolzen und danach erst das außerhalb der Hülse 49 vorhandene Material. Hierdurch wird erreicht, daß beim Schmelzen des erstarrten Materials im Schmelztiegel der Ventilkörper 13 seine Schließstellung stabil beibehält, während bei ungleichförmigem Schmelzen des Materials im Schmelztiegel, insbesondere im untern Bereich des Ventilkörpers 13 die Gefahr besteht, daß der Ventilkörper 13, der im wesentlichen im Schmelztiegel 11 nur aufgehängt ist und keine Führung hat, seitlich weggedrückt wird, wodurch die Gießöffnung freigegeben wird. Durch die Öffnungen 51 in der Hülse 49 kann ein Niveauausgleich der Schmelze auf der Innen- und Außenseite der Hülse erfolgen.

Anstelle der dargestellten Betätigung des Ventilkörpers 13 über einen in einer Öffnung 52 in der Wand des Schmelztiegels abgestützten Lenker 43 kann ein über dem Ventilkörper 13 angeordnetes und mit diesem direkt verbundenes Magnetventil vorgesehen werden, das zugleich als Führung für den Ventilkörper 13 dient. Zusätzlich kann der Ventilkörper 13 durch eine nicht dargestellte Feder in Schließrichtung beaufschlagt sein. Nach einer anderen Ausführungsform kann der Ventilkörper 13 auf der Oberseite mit einer Führung versehen sein, die in ein entsprechendes, an der Glocke 2 befestigtes Führungsteil eingreift.

Bei dem dargestellten Ausführungsbeispiel ist wegen des am Ventilkörper 13 angelenkten Lenkers 43 unterhalb von diesem eine Überlauföffnung 53 in der Schmelztiegelwand vorgesehen. Der Schmelztiegel kann auf der Außenseite zusätzlich mit einer Heizeinrichtung, beispielsweise einer Heizspule versehen werden, die bei Inbetriebsetzen des Gerätes nach längerem Stillstand eingeschaltet werden kann. Durch eine nicht dargestellte Temperaturüberwachungseinrichtung kann bei Absinken der Temperatur der Schmelze unter einen vorbestimmten Wert über die elektrische Steuereinheit 4 die elektrische Heizung eingeschaltet und bei Erreichen einer vorbestimmten höheren Temperatur wieder abgeschaltet werden.

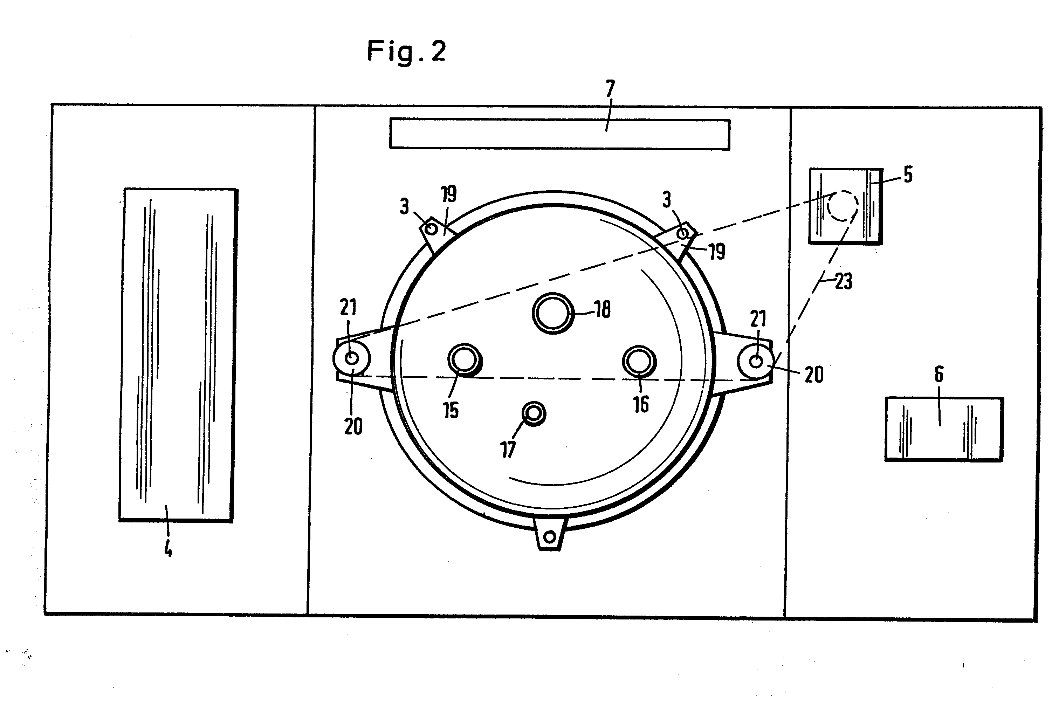

Auf der Oberseite der Glocke sind Anschlüsse 15 und 16 für eine Druckgas-und eine Vakuumleitung vorgesehen, die im einzelnen nicht wiedergegeben sind. Bei 17 ist eine Gewindebohrung für ein Sicherheitsventil und bei 18 in Fig. 2 eine Einfüllöffnung für das zu schmelzende Material angedeutet. Zusätzlich zu den Führungsansätzen 19, durch welche die Führungsstangen 3 geführt sind, sind an der Glocke 2 an diametral gegenüberliegenden Stellen Muttern 20 an gabelförmigen Ansätzen befestigt, durch die jeweils eine Gewindespindel 21 führt, die in der Tragplatte 1 drehbar und in Achsrichtung nicht verschiebbar gelagert ist. An den auf der Unterseite der Tragplatte 1 vorstehenden Enden der Gewindespindeln 21 ist jeweils ein Zahnrad 22 befestigt, das mit einem Zahnriemen 23 in Eingriff steht, welcher um ein entsprechendes Antriebszahnrad 24 geführt ist, das vom Motor 5 zum Anheben und Absenken der Glocke 2 in Drehung versetzt werden kann.

Am unteren Rand der Glocke 2 ist in einer im Querschnitt U-förmigen Ringnut 25 eine schlauchförmige, elastische Ringdichtung 26 angeordnet, die über einen Anschluß 27 mit einem Druckfluid beaufschlagbar ist. Beim Absenken der Glocke 2 wird diese beispielsweise über einen Endschalter in einem geringen Abstand über der Oberfläche der Tragplatte 1 angehalten. Hierauf wird die schlauchförmige Ringdichtung 26 mit Druckfluid beaufschlagt, so daß die Dichtung gegen den Rand der Glocke 2 und gegen die Oberfläche der Tragplatte 1 gepreßt, und damit eine sichere Abdichtung gewährleistet wird. Die Ringdichtung 26 wird dabei mit dem gleichen Druck beaufschlagt, der auch an der Glocke 2 angelegt wird.

Auf der nicht dargestellten Vorderseite des Gerätes sind Schalter zum Ein- und Ausschalten des Gerätes, für die Programmwahl und dgl., sowie Überwachungseinrichtungen wie Manometer, Füllanzeige, Druck- und Temperaturanzeige und dgl. angeordnet. Ferner ist an der Vorderseite eine Türe vorgesehen, durch welche bei angehobener Glocke 2 die Gußformen 29 eingesetzt oder herausgenommen werden können. An der Tür ist ein Sicherheitsschalter angeordnet, der ein Öffnen der Tür nur bei angehobener Glocke 2 zuläßt. Zum Nachfüllen von Gußmaterial kann der Dom 9 abgenommen und der Verschluß an der Einfüllöffnung 18 gelöst werden.

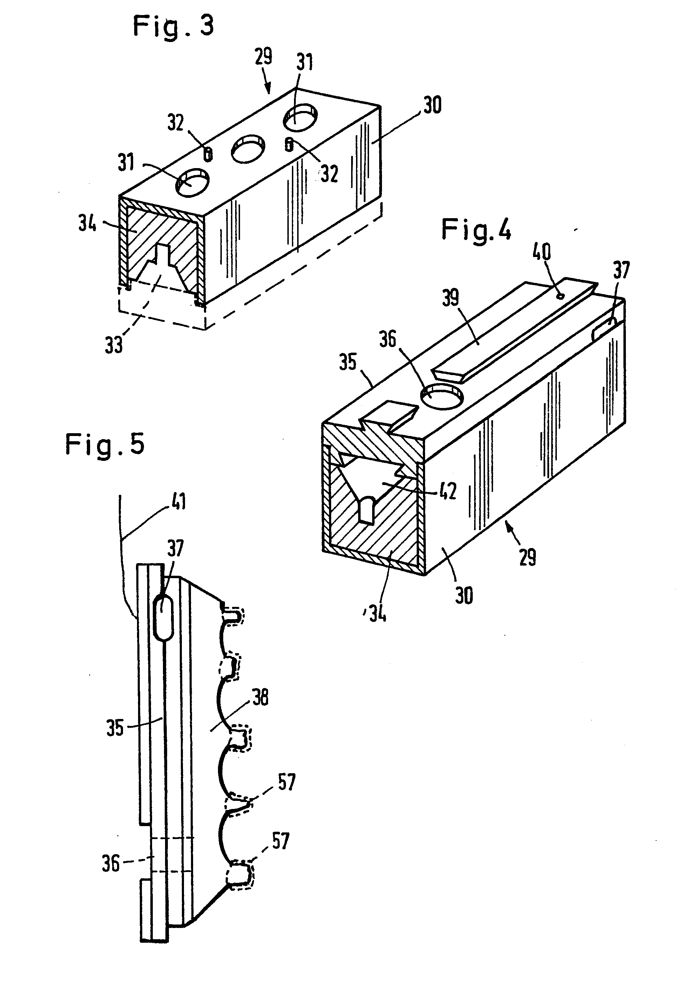

Die Fig. 3 zeigt die Unterseite einer der Gußformen 29, die auf einer Formplatte 28 angeordnet werden können, die auf der Tragplatte 1 aufliegt und bei geschlossener Gießkammer innerhalb der Glocke 2 liegt. Bei dem dargestellten Ausführungsbeispiel weist die Gußform 29 einen rechteckigen, auf der Oberseite (in Fig. 3 unten) offenen Behälter 30 auf, auf dessen Unterseite Einfüllöffnungen 31 und Positionierstifte 32 ausgebildet sind. Dieser Behälter 30 wird zunächst in leerem Zustand auf einen Sockel aufgesetzt, der in Fig. 3 durch gestrichelte Linien angedeutet ist und das zu duplizierende Meistermodell 33 trägt. Durch die Einfüllöffnungen 31 wird ein Silikonkautschuk eingegossen, der sich nach einer gewissen Zeit verfestigt und nach Abnahme vom Meistermodell 33 eine formbeständige, elastische Form 34 bildet, die bei der Darstellung in Fig. 3 die Negativform der Krone auf einem Zahnstumpf wiedergibt. Nach dem Eingießen des Silikonkautschuks in den vom Meistermodell abgeschlossenen Behälter 30 kann die so gebildete Anordnung in die von der Gocke 2 gebildete Gießkammer eingebracht und nach Absenken der Glocke vorzugsweise mit Druck, aber auch mit Vakuum beaufschlagt werden, damit in dem flüssigen Silikonkautschuk enthaltene Blasen beseitigt werden und ein genauer Abguß erhalten wird. Nach einer von der Steuereinheit 4 vorgebbaren Verweilzeit wird der Druck bzw. das Vakuum abgeschaltet, die Glocke 2 entlüftet und durch ein entsprechendes Signal von der Steuereinheit 4 durch den Motor 5 angehoben, worauf die in Fig. 3 wiedergegebene Anordnung mit der inzwischen verfestigten Form 34 entnommen werden kann.

Nach Abnahme des Behälters 30 mit der Form 34 vom Meistermodell 33 wird auf die offene Seite des Behälters 30 eine Abdeckung 35 (Fig. 4) aufgesetzt, die aus einem elektrisch nicht-leitenden, hitzebeständigen Material, z.B. aus Polytetrafluoräthylen, besteht. Diese Abdeckung 35 ist mit einer Einfüllöffnung 36 und einer seitlich angeordneten Überlauföffnung 37 versehen. Die in Fig. 4 wiedergegebene Anordnung wird auf der Formplatte 28 angeordnet, die den Positionierstiften 32 entsprechende Bohrungen aufweist, so daß bei der Anordnung
einer einzelnen Gußform 29 deren Einfüllöffnung 36 unter die
Gießöffnung 12 des Schmelztiegels 11 zu liegen kommt. Die
Formplatte 28 kann weitere Bohrungen aufweisen, so daß beispielsweise vier etwa sternförmig auf der Formplatte 28 angeordnete Gußformen 29 so positioniert werden können, daß die
Einfüllöffnungen 36 jeweils unter der Austrittsöffnung eines
Verteilers 54 liegen, der an die Gießöffnung 12 ansetzbar
und in Fig. 7 dargestellt ist.

Der Verteiler 54 weist einen etwa trichterförmigen Hohlraum
auf, von dem in radialer Richtung Verteilerarme 55 wegführen.    In der dargestellten Gießstellung liegt der
Verteiler 54 auf einem auf der Formplatte 28 angeordneten
Anschlag 56 auf, durch den die Austrittsöffnungen an den
Verteilerarmen in einem geringen Abstand über den Einfüllöffnungen 36 der einzelnen Gußformen 29 positioniert werden.
Es können verschieden Verteiler 54 mit einem, zwei, drei oder
vier Verteilerarmen 55 bereitgestellt werden, so daß wahlweise eine oder mehrere Gußformen 29 gefüllt werden könnnen.
Zum Anbringen des Verteilers 54 an der Gießöffnung 12 kann
ein Gewinde oder ein Bajonettverschluß vorgesehen werden.

Nach dem Einsetzen einer oder mehrere der Gußformen 29 in
der Anordnung nach Fig. 4 auf der Formplatte 28 wird die
Glocke 2 nach Einschalten eines gewählten Programms abgesenkt, worauf die Ringdichtung 26 mit Druckfluid beaufschlagt und danach an der Glocke 2 zunächst Vakuum angelegt und über einen Steuerimpuls von der Steuereinheit 4
das Gießventil am Schmelztiegel geöffnet wird. In dem
Schmelztiegel 11 ist ein niedrig schmelzendes Metall enthalten, das in die Form 34 fließt und, sobald diese gefüllt
ist, an der Überlauföffnung 37 austritt. Unter der Überlauföffnung 37 wird auf der Formplatte 28 ein nicht dargestellter
Auffangbehälter angeordnet. Die Steuereinheit 4 kann ein
vorbestimmte Gießzeit vorgeben, welche gewährleistet, daß jede Form gefüllt ist, wobei das bei einer kleineren Form
überlaufende Material im Auffangbehälter aufgenommen wird.
Anstelle einer vorgegebenen Gießzeit kann auch eine nicht
dargestellte optische oder mechanische Überwachungseinrichtung vorgesehen werden, die bei Austreten der Schmelze
aus der Überlauföffnung 37 ein Steuersignal an die Steuereinheit 4 zum Schließen des Gießventils abgibt.

Während das Gießen unter Vakuum erfolgt, wird bei Abschluß
des Gießvorganges die Glocke 2 mit Druck beaufschlagt, damit
die Form 34 exakt ausgefüllt wird.

Auf der nicht dargestellten Vorderseite des Geräts ist eine
Anzeigelampe vorgesehen, die über eine Temperaturmeßeinrichtung aufleuchtet, sobald das niedrig schmelzende Metall
in der Form 34 erstarrt ist und die für die weitere Handhabung erforderliche niedrige Temperatur hat. Zuvor wird
durch ein in der Steuereinheit 4 vorgegebenes Programm der
Druck abgeschaltet, die Glocke 2 belüftet, die Ringdichtung
26 entlüftet und danach über den Motor 5 die Glocke 2 angehoben.

Die Abdeckung 35 weist auf der in Fig. 4 wiedergegebenen
Unterseite eine Ausnehmung 42 mit hinterschnittenen Rändern
auf, so daß der durch das verfestigte, niedrig schmelzende
Metall gebildete Abguß 38 (Fig. 5) des ursprünglichen
Meistermodells 33 fest mit der Abdeckung 35 verbunden ist.
Hierdurch kann die Abdeckung 35 von der Gußform 29 zusammen
mit dem Abguß 38 abgenommen werden. Bei dem in Fig. 5
wiedergegebenen Ausführungbeispiel weist der Abguß 38
fünf Einzelmodelle von Kronen auf Zahnstümpfen auf, die in
einem galvanischen Bad durch Abscheidung von Gold auf den
Einzelmodellen ausgebildet werden. Dabei werden die Seitenflächen des Abgusses 38 und die zwischen den Einzelmodellen liegenden Flächen, auf denen keine Beschichtung aufgetragen werden soll, mit einer Abdeckung versehen, beispielsweise mit einem Lack bestrichen, so daß die galvanische Abscheidung nur in den erwünschten Bereichen des Modells erfolgt.

Die Abdeckung 35 kann zur Halterung des Abgusses 38 im galvanischen Bad verwendet werden. Hierzu ist in Fig. 4 auf der Oberseite der Abdeckung 35 eine schwalbenschwanzförmige Führung 39 ausgebildet, mittels der die Abdeckung 35 zusammen mit dem Abguß 38 in eine entsprechende Aufnahmenut eines in das galvanische Bad eintauchbaren Trägers eingeschoben werden kann. An einem solchen Träger können mehrere solcher Aufnahmenuten zur Aufnahme mehrere Abdeckungen 35 vorgesehen sein. Um eine elektrische Verbindung mit dem Abguß 38 herzustellen, ist in der Abdeckung 35 eine Bohrung 40 (Fig. 4) ausgebildet, in die vor dem Einsetzen der Gußform 29 mit der Abdeckung 35 in die Gießkammer ein Draht 41 eingesteckt wird, der beim Füllen der Form 34 mit niedrig schmelzendem Metall mit dem so hergestellten Abguß 38 verbunden wird. Dieser für die elektrische Verbindung im galvanischen Bad vorgesehene Draht 41 kann nach dem Ausschmelzen des Abgusses 38 von den bei 57 (in Fig. 5) durch gestrichelte Linien dargestellten, durch galvanische Abscheidung hergestellten Zahnersatzteilen mitentfernt werden, worauf die Abdeckung 35 für einen weiteren Gießvorgang verwendet werden kann.

Die durch Schmelzen des Abgusses 38 aus niedrig schmelzendem Metall erhaltenen Zahnersatzteile 57 können dann mit Kunststoff ausgegossen und weiter bearbeitet werden. Dabei kann das beschriebene Gießgerät nicht nur für Kronen und Brücken, sondern auch für Prothesenteile und dgl. verwendet werden, wobei anstelle der dargestellten positiven Form des Meistermodells auch eine Negtivform als Ausgangsmodell verwendet werden kann.

Die Abdeckung 35 kann anstelle der Schwalbenschwanz-Führung
auch mit einer anderen Steck- oder Schnappverbindung für
die Befestigung an einem Träger für das galvanische Bad versehen werden. Ebenso kann anstelle der hinterschnittenen
Ausnehmungen 42 ein beispielsweise im Querschnitt T-förmiger
Vorsprung an der Abdeckung 35 vorgesehen werden, mittels
dem der Abguß 38 mit der Abdeckung 35 verbunden wird.

An dem Sockel des Meistermodells 33 können den Positionierstiften 32 entsprechende Positionierstifte angebracht sein,
so daß auch beim Einsetzen der in Fig. 3 wiedergegebenen Anordnung auf der Formplatte 28 eine Halterung vorhanden ist.

Es sind verschiedene Abwandlungen der beschriebenen Bauweise möglich. So kann der Schmelztiegel 11 auch außerhalb
der Glocke 2 angeordnet und über eine Gießleitung mit deren
Innerem verbunden sein. Ebenso ist es möglich, den Schmelztiegel 11 in der Glocke 2 verdrehbar anzuordnen und mit
einer exzentrischen Gießöffnung 12 zu versehen, so daß durch
Verdrehen des Schmelztiegels 11 mehrere Gußformen 29 nacheinander gefüllt werden können.

Anstelle einer optischen Überwachung des Überlaufs 37 durch
eine Lichtschranke kann auch eine mechanische Abschaltung
des Gießvorganges vorgesehen werden, die beispielsweise mit
dem nicht dargestellten, unter der Überlauföffnung 37 angeordneten Auffangbehälter zusammenwirkt. Nach einer anderen
Ausführungsform kann an der Überlauföffnung 37 ein Hebel
positioniert werden, der z.B. an einer der Streben 10 angelenkt und mit einer Schalter verbunden ist. Bei Austreten
von Schmelze am Überlauf 37 wird dieser Hebel verschwenkt
und schaltet über das Magnetventil 14 den Gießvorgang ab.

Die Steuereinheit 4 kann mit verschiedenen Programmen für
verschiedene automatische Betreibsabläufe  versehen sein,
wobei sie mit den entsprechenden Anzeigeeinrichtungen     - 14 -

für Füllung des Schmelztiegels 11, Temperatur, Druck und den Betriebsablauf verbunden ist. Hierzu sind an der Glocke 2 und/oder an der Formplatte 28 nicht dargestellte Drucküberwachungseinrichtungen und dgl. angeordnet.

Anstelle einer verschiebbar angebrachten Glocke 2 kann bei einer größeren Ausführungsform auch die Tragplatte 1 absenkbar angeordnet werden.

Das beschriebene Gerät kann nicht nur für die Herstellung von Zahnersatzteilen, Prothesen und dgl. verwendet werden, sondern auch für andere Gießvorgänge wie beispielsweise die Herstellung von Schmuck anhand eines Modells und dgl. Dabei kann das beschriebene Gerät nicht nur für Gießzwecke, sondern auch für Druck- oder Vakuumbeaufschlagung eingesetzt werden, wie dies anhand der Anordnung nach Fig. 3 erläutert wurde.

Für die Druckbeaufschlagung kann eine vorhandene Druckluftquelle vorgesehen werden. Ebenso ist es möglich, hierfür ein Gas zu verwenden, wenn in einer inerten Atmosphäre gegossen oder eine Druckbeaufschlagung erfolgen soll. Durch einen in der Steuereinheit 4 angeordneten Mikroprozessor können bestimmmte Programme vorgegeben werden, so daß verschiedene Betriebsabläufe mit Druck- oder Vakuumbeaufschlagung und Gießvorgang automatisch ablaufen können.

Das Gerät kann für eine Druckbeaufschlagung bis 18 bar ausgelegt werden. Das anlegbare Vakuum hängt von der Leistungsfähigkeit der Vakuumpumpe 6 ab. Bei dem beschriebenen Verfahren wird ein Metall als Gußmaterial verwendet, das bei etwa 95° schmilzt. Die Heizung am Schmelztiegel 11 kann so ausgelegt werden, daß Heiztemperaturen bis 1000° erzielt werden können, so daß nicht nur mit niedrig schmelzendem Material gearbeitet werden kann.

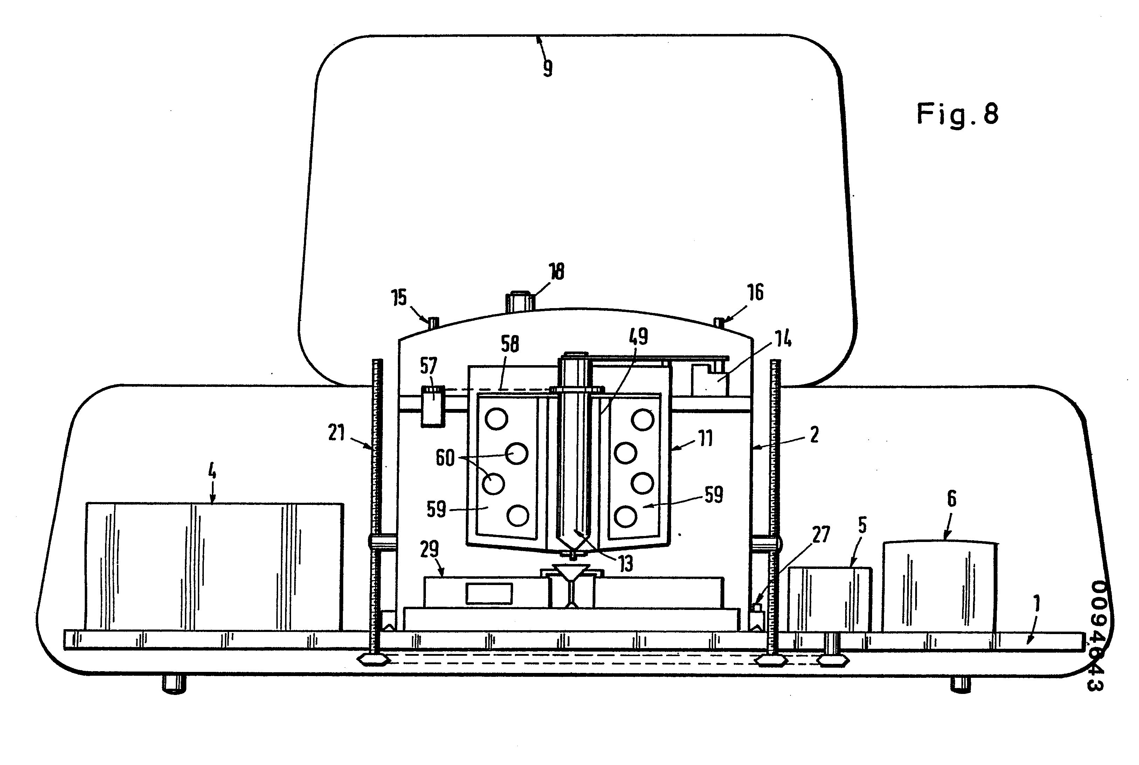

Die Fig. 8 zeigt eine Ausführungsform des Gerätes, bei der im Schmelztiegel 11 ein Rührwerk angeordnet ist. Auf einer der Streben 10 ist ein Elektromotor 57 angeordnet, der über einen Ketten- oder Riemenantrieb 58 Rührpaddel 59 antreibt, die auf dem Ventilkörper 13 drehbar gelagert sind. Die Rührpaddel 59 sind mit Durchbrechungen 60 versehen.

Die Fig. 8 zeigt die Glocke 2 mit Schmelztiegel 11 in abgesenktem Zustand, wobei zwischen den Gußformen 29 der in Fig. 7 im einzelnen wiedergegebene Verteiler 54 angeordnet ist.

Patentansprüche
===================

1. Gießgerät für Dentalgußteile, mit einer durch ein Verschlußteil druckfest abschließbaren Gießkammer, die
   wenigstens einen Anschluß für Druck und/oder Vakuum
   aufweist, mit einem Schmelztiegel und mit einer elektrischen Steuereinheit für einen automatischen Betriebsablauf,
   d a d u r c h  g e k e n n z e i c h n e t ,
   daß die Gießöffnung des Schmelztiegels (11) durch ein
   Gießventil (13) verschließbar ist, wobei der im Schmelztiegel (11) angeordnete Ventilkörper (13) des Gießventils mit einer elektrischen Heizeinrichtung (45) versehen
   ist.

2. Gießgerät nach Anspruch 1, dadurch gekennzeichnet,
   daß der Ventilkörper (13) durch ein Magnetventil (14)
   betätigbar ist, das mit der Steuereinheit (4) verbunden
   ist.

3. Gießgerät nach den Ansprüchen 1 und 2, dadurch gekennzeichnet, daß der stabförmig ausgebildete Ventilkörper (13) konzentrisch in einem Abstand von einer Hülse (49)
   umgeben ist, die in der Schließstellung am Boden des
   Schmelztiegels (11) aufliegt und im unteren Bereich mit
   radialen Öffnungen (51) auf dem Umfang versehen ist.

4. Gießgerät nach den vorhergehenden Ansprüchen, dadurch gekennzeichnet, daß der Schmelztiegel (11) mit Magnetventil (14) in der als Glocke (2) ausgebildeten Gießkammer angeordnet ist, wobei die Glocke (2) relativ zu einer Platte (1) bewegbar ist.

5. Gießgerät nach Anspruch 4, dadurch gekennzeichnet, daß zwischen Glocke (2) und Platte (1) wenigstens eine Gewindespindel (21) vorgesehen ist, die durch einen Elektromotor (5) antreibbar ist.

6. Gießgerät nach den Ansprüchen 4 und 5, dadurch gekennzeichnet, daß zwischen Glocke (2) und Platte (1) eine mit einem Druckfluid beaufschlagbare, schlauchförmige Dichtung (26) vorgesehen ist.

7. Gießgerät nach den vorhergehenden Ansprüchen, dadurch gekennzeichnet, daß eine Formplatte (28) mit Aufnahmeeinrichtungen zum Einsetzen einer Gießform (29) oder Gießformen vorgesehen ist, wobei die Gießform (29) mit einer Überlauföffnung (37) versehen ist.

8. Gießgerät nach Anspruch 7, dadurch gekennzeichnet, daß die Gießform (29) mit einer Abdeckung (35) versehen ist, die auf der Unterseite eine hinterschnittene Ausnehmung (42) oder einen Vorsprung zur Befestigung des verfestigten Abgusses (38) aufweist.

9. Gießgerät nach Anspruch 8, dadurch gekennzeichnet, daß die Abdeckung (35) aus elektrisch nicht-leitendem Material besteht und mit einem elektrisch leitendem Anschluß (41) versehen ist, der mit dem Abguß (38) in leitender Verbindung steht.

10. Gießgerät nach den Ansprüchen 7 bis 9, dadurch gekennzeichnet, daß die Überlauföffnung (37) an der Abdeckung (35) ausgebildet ist.

----

Fig.1

0094643

# Fig.2

0094643

Fig. 3

Fig. 4

Fig. 5

## Fig. 6

## Fig. 7

Fig. 8